# EUROPÄISCHE PATENTSCHRIFT

(11) **EP 3 727 729 B1**
(45) Veröffentlichungstag und Bekanntmachung des Hinweises auf die Patenterteilung: **31.07.2024**
(21) Anmeldenummer: 18811880.6
(22) Anmeldetag: 11.12.2018
(51) Int. Cl.: B23B 51/04, B28D 1/04, B23D 65/00, B23P 15/28

(54) **VERFAHREN ZUR HERSTELLUNG EINES SCHNEIDABSCHNITTES FÜR EINE BOHRKRONE**
METHOD FOR PRODUCING A CUTTING SECTION FOR A CORE BIT
PROCÉDÉ DE FABRICATION D'UNE SECTION DE COUPE POUR UNE COURONNE DE FORAGE

(30) Priorität: 21.12.2017 EP 17209437
(43) Veröffentlichungstag der Anmeldung: 28.10.2020
(73) Patentinhaber: Hilti Aktiengesellschaft, 9494 Schaan (LI)
(72) Erfinder: SCHROEDER, Florian, 7304 Maienfeld (CH); DOMANI, Guenter, 88138 Weissensberg (DE); RONG, Pingyan, 6800 Feldkirch (AT)
(74) Vertreter: Hilti Aktiengesellschaft Corporate Intellectual Property
(86) Internationale Anmeldenummer: PCT/EP2018/084287
(87) Internationale Veröffentlichungsnummer: WO 2019/121139

(56) Entgegenhaltungen:
- EP-A1- 0 480 263
- WO-A1-2014/096366
- GB-A- 1 583 860
- DATABASE WPI Week 198305, 1983 Derwent World Patents Index; AN 1983-B6129K, XP002781971

## Beschreibung

### Technisches Gebiet

Die vorliegende Erfindung betrifft ein Verfahren zur Herstellung eines Schneidabschnittes für eine Bohrkrone gemäß dem Oberbegriff des Anspruchs 1.

### Stand der Technik

WO 2014/096359 A1 offenbart einen Schneidabschnitt für eine Bohrkrone, der mit einem Bohrschaftabschnitt der Bohrkrone über eine lösbare Verbindungseinrichtung verbindbar ist. Dabei ist die lösbare Verbindungseinrichtung als kombinierte Steck-Dreh-Verbindung ausgebildet. Als "Steck-Dreh-Verbindung" werden lösbare Verbindungen zwischen einem ersten und zweiten Verbindungselement bezeichnet, die in einer Richtung eine Steckverbindung bilden und zusätzlich über eine Drehverbindung verbunden werden. Der Schneidabschnitt umfasst eine oder mehrere Bohrsegmente, einen Ringabschnitt, ein äusseres Steckelement und eine ringförmige Anschlagschulter am Übergang vom Ringabschnitt zum äusseren Steckelement.

Schneidabschnitte, die mit einer kombinierten Steck-Dreh-Verbindung verbindbar sind, werden unter dem Produktnamen "Hilti DD X-CM" vertrieben. Die Schneidabschnitte "Hilti DD X-CM" umfassen mehrere Bohrsegmente, einen Ringabschnitt und ein äusseres Steckelement, wobei sich am Übergang vom Ringabschnitt zum äusseren Steckelement eine ringförmige Anschlagschulter für die Kraftübertragung befindet. Die Drehmomentübertragung erfolgt mithilfe von Stiftelementen, die mit schlitzförmigen Ausnehmungen im äusseren Steckelement zusammenwirken. Die Schneidabschnitte "Hilti DD X-CM" werden aus einem geschlossenen Rohrelement gefertigt. Dabei wird die ringförmige Anschlagschulter durch Drehbearbeitung erzeugt und die schlitzförmigen Ausnehmungen werden durch Fräsbearbeitung erzeugt.

Nachteilig am Aufbau der bekannten Schneidabschnitte "Hilti DD X-CM" sind der hohe Fertigungsaufwand durch die Drehbearbeitung der ringförmigen Anschlagschulter und die Fräsbearbeitung der schlitzförmigen Ausnehmungen. Außerdem ist die Materialauswahl für den Ringabschnitt und das äussere Steckelement eingeschränkt. Da die Schneidabschnitte "Hilti DD X-CM" aus einem geschlossenen Rohrelement gefertigt werden, muss hinsichtlich der Anforderungen an den Schneidabschnitt bezüglich Kraftübertragung, Drehmomentübertragung und Zugbelastungen beim Entfernen einer verklemmten Bohrkrone ein Kompromiss bei der Materialauswahl getroffen werden.

GB 1 583 860 A offenbart ein Verfahren zur Herstellung eines Bohrschaftes für eine Bohrkrone, wobei der Bohrschaft aus einem oder mehreren Blechteilen hergestellt wird. Die Idee der GB 1 583 860 A besteht darin, die Wandstärke des Bohrschaftes, die mit zunehmendem Durchmesser ebenfalls zunimmt, aus mehreren dünnen Blechteilen oder mehreren Blechlagen eines Blechteils zu erzeugen. Der Bohrschaft kann aus einem ersten Blechteil und einem zweiten Blechteil hergestellt werden, die zu einem ersten offenen Rohrelement und einem zweiten offenen Rohrelement umgeformt werden. Wenn das zweite offene Rohrelement den gewünschten Durchmesser aufweist, wird das erste offene Rohrelement im Bereich seiner Enden mit dem zweiten offenen Rohrelement verbunden und das zweite offene Rohrelement wird im Bereich seiner Enden mit dem ersten offenen Rohrelement verbunden.

### Darstellung der Erfindung

Die Aufgabe der vorliegenden Erfindung besteht darin, ein Verfahren zur Herstellung des aus der WO 2014/096359 A1 bekannten Schneidabschnittes für eine Bohrkrone zu entwickeln, der Fertigungsaufwand bei der Herstellung des Schneidabschnittes reduziert werden kann. Außerdem soll die Funktionalität des Schneidabschnittes beim Bohren mit der Bohrkrone im Hinblick auf Kraftübertragung, Drehmomentübertragung und/oder Zugbelastungen beim Entfernen einer verklemmten Bohrkrone verbessert werden.

Diese Aufgabe wird bei dem eingangs genannten Verfahren zur Herstellung eines Schneidabschnittes für eine Bohrkrone erfindungsgemäß durch die Merkmale des unabhängigen Anspruchs 1 gelöst. Vorteilhafte Weiterbildungen sind in den abhängigen Ansprüchen angegeben.

Der mit dem erfindungsgemäßen Verfahren hergestellte Schneidabschnitt für eine Bohrkrone kann mit einem Bohrschaftabschnitt der Bohrkrone über eine lösbare Verbindungseinrichtung verbunden werden.

Das Verfahren zur Herstellung eines Schneidabschnittes für eine Bohrkrone umfasst die Verfahrensschritte:
▪ ein erstes offenes Rohrelement wird in Form eines ersten Hohlzylinders mit einer ersten äusseren Mantelfläche, einer ersten inneren Mantelfläche, einer ersten unteren Stirnfläche und einer ersten oberen Stirnfläche ausgebildet und weist eine erste Hohlzylinderhöhe, einen ersten Innendurchmesser und einen ersten Aussendurchmesser auf,
▪ ein zweites offenes Rohrelement wird in Form eines zweiten Hohlzylinders mit einer zweiten äusseren Mantelfläche, einer zweiten inneren Mantelfläche, einer zweiten unteren Stirnfläche und einer zweiten oberen Stirnfläche ausgebildet und weist eine zweite Hohlzylinderhöhe, einen zweiten Innendurchmesser und einen zweiten Aussendurchmesser auf,
▪ das erste offene Rohrelement wird in das zweite offene Rohrelement gesteckt und
▪ ein oder mehrere Bohrsegmente werden mit dem ersten offenen Rohrelement und dem zweiten Rohrelement verbunden.

Erfindungsgemäß ist vorgesehen, dass das zweite offene Rohrelement an zweiten Stosskanten zu einem zweiten geschlossenen Rohrelement verbunden wird und im zweiten geschlossenen Rohrelement mindestens eine schlitzförmige Ausnehmung erstellt wird, wobei die mindestens eine schlitzförmige Ausnehmung einen Querschlitz und einen Verbindungsschlitz aufweist und der Verbindungsschlitz den Querschlitz mit der zweiten oberen Stirnfläche des zweiten geschlossenen Rohrelementes verbindet.

Der Schneidabschnitt, der mithilfe des erfindungsgemäßen Verfahrens hergestellt wird, umfasst ein erstes offenes Rohrelement, ein zweites geschlossenes Rohrelement und mindestens ein Bohrsegment. Das erste offene Rohrelement ist in Form eines ersten Hohlzylinders ausgebildet und umfasst eine erste äussere Mantelfläche, eine erste innere Mantelfläche, eine erste untere Stirnfläche und eine erste obere Stirnfläche. Das zweite geschlossene Rohrelement ist in Form eines zweiten Hohlzylinders ausgebildet und umfasst eine zweite äussere Mantelfläche, eine zweite innere Mantelfläche, eine zweite untere Stirnfläche und eine zweite obere Stirnfläche. Um den Schneidabschnitt fertigzustellen, werden das erste offene Rohrelement und das zweite geschlossene Rohrelement ineinandergesteckt und das eine oder die mehreren Bohrsegmente werden mit dem ersten offenen Rohrelement und mit dem zweiten geschlossenen Rohrelement verbunden. Im Hinblick auf die Stabilität des Schneidabschnittes ist es vorteilhaft, wenn die Bohrsegmente mit dem ersten offenen Rohrelement und dem zweiten geschlossenen Rohrelement verbunden sind. Dabei können die Bohrsegmente mit dem ersten offenen Rohrelement und dem zweiten geschlossenen Rohrelement verschweißt, verlötet, verschraubt oder in einer anderen geeigneten Befestigungsart verbunden werden.

Der Schneidabschnitt ist so aufgebaut, dass die Kraftübertragung von einem Bohrschaftabschnitt über das erste offene Rohrelement auf die Bohrsegmente und die Drehmomentübertragung vom Bohrschaftabschnitt über das zweite geschlossene Rohrelement auf die Bohrsegmente erfolgt. Die erste obere Stirnfläche des ersten offenen Rohrelementes bildet eine ringförmige Anschlagschulter, die zur Kraftübertragung verwendet wird. Der Bohrschaftabschnitt überträgt die Kraft mittels einer ringförmigen Stirnfläche auf die ringförmige Anschlagschulter. Die Drehmomentübertragung erfolgt beispielsweise über Stiftelemente des Bohrschaftabschnittes, die mit schlitzförmigen Ausnehmungen im zweiten geschlossenen Rohrelement zusammenwirken. Durch die Trennung des Schneidabschnittes in das erste offene Rohrelement und das zweite geschlossene Rohrelement können die unterschiedlichen Anforderungen an den Schneidabschnitt im Hinblick auf die Kraftübertragung und Drehmomentübertragung berücksichtigt werden.

Die mindestens eine schlitzförmige Ausnehmung ist Teil der lösbaren Verbindungseinrichtung, die den Schneidabschnitt mit einem Bohrschaftabschnitt der Bohrkrone verbindet. Die schlitzförmige Ausnehmung ist in T-Form oder L-Form ausgebildet und ermöglicht im verbundenen Zustand der Bohrkrone eine Relativbewegung zwischen dem Schneidabschnitt und dem Bohrschaftabschnitt. Durch die Relativbewegung zwischen dem Schneidabschnitt und dem Bohrschaftabschnitt kann ein verklemmter Schneidabschnitt aus dem Untergrund gelöst werden.

Durch die Trennung des Schneidabschnittes in das erste offene Rohrelement und das zweite geschlossene Rohrelement kann außerdem der Fertigungsaufwand für die Herstellung des Schneidabschnittes reduziert werden. Die erste obere Stirnfläche bildet die ringförmige Anschlagschulter für die Kraftübertragung, so dass eine Drehbearbeitung entfällt. Das erste offene Rohrelement und das zweite geschlossene Rohrelement sind als Hohlzylinder mit kreisringförmigen Querschnitten ausgebildet und weisen konstante Materialstärken auf. Das erste offene Rohrelement kann aus einem ersten ebenen Blechteil hergestellt werden, das zum ersten offenen Rohrelement umgeformt wird. Das zweite geschlossene Rohrelement kann aus einem zweiten ebenen Blechteil hergestellt werden, das zu einem zweiten offenen Rohrelement umgeformt wird und an zweiten Stosskanten stoffschlüssig oder formschlüssig verbunden wird.

Das erste offene Rohrelement hat den Vorteil, dass die erste äussere Mantelfläche des ersten offenen Rohrelementes mit der zweiten inneren Mantelfläche des zweiten offenen Rohrelementes in Kontakt steht. Wenn die erste äussere Mantelfläche und die zweite innere Mantelfläche in Kontakt sind, können die Bohrsegmente mit einer Schweißnaht mit dem ersten offenen Rohrelement und dem zweiten geschlossenen Rohrelement verbunden werden.

Bevorzugt werden die erste untere Stirnfläche des ersten offenen Rohrelementes und die zweite untere Stirnfläche des zweiten geschlossenen Rohrelementes bündig ausgerichtet. Die bündige Ausrichtung der ersten unteren Stirnfläche und der zweiten unteren Stirnfläche hat den Vorteil, dass eine breite Anbindungsfläche für die Bohrsegmente entsteht, an der die Bohrsegmente mit dem ersten offenen Rohrelement und dem zweiten geschlossenen Rohrelement verbunden werden können.

Besonders bevorzugt werden das eine oder die mehreren Bohrsegmente mit der ersten unteren Stirnfläche und der zweiten unteren Stirnfläche verbunden. Durch die bündige Ausrichtung der ersten unteren Stirnfläche und der zweiten unteren Stirnfläche entsteht eine breite Anbindungsfläche für die Bohrsegmente. Wenn die Bohrsegmente mit der ersten unteren Stirnfläche und der zweiten unteren Stirnfläche verbunden werden, können das erste offene Rohrelement und das zweite geschlossene Rohrelement gleichzeitig miteinander verbunden werden. Wenn die Bohrsegmente gleichzeitig mit dem ersten offenen Rohrelement und dem zweiten geschlossenen Rohrelement verbunden werden, kann der Fertigungsaufwand reduziert werden. Abhängig von den verwendeten Materialstärken kann es erforderlich sein, dass das erste offene Rohrelement und das zweite geschlossene Rohrelement zusätzlich miteinander verbunden werden. Sollten höhere Widerstandsmomente erforderlich sein, können das erste offene Rohrelement und das zweite geschlossene Rohrelement zusätzlich miteinander verbunden werden.

Besonders bevorzugt wird in der zweiten inneren Mantelfläche mindestens eine Quernut erstellt, wobei die mindestens eine Quernut in Höhe des Verbindungsschlitzes der schlitzförmigen Ausnehmung angeordnet wird. Die mindestens eine Quernut ist Teil der lösbaren Verbindungseinrichtung, die den Schneidabschnitt mit einem Bohrschaftabschnitt der Bohrkrone verbindet. Die Breite der Quernut ist grösser oder gleich der Breite des Querschlitzes der schlitzförmigen Ausnehmung. In die Quernut des Schneidabschnittes greift eine passende Quernase eines Bohrschaftabschnittes ein. Die Quernut und Quernase bilden eine zusätzliche formschlüssige Verbindung, die verhindert, dass die Steck-Dreh-Verbindung beim Lösen einer verklemmten Bohrkrone unbeabsichtigt geöffnet wird und der Bohrschaftabschnitt ohne Schneidabschnitt aus dem Untergrund entfernt wird.

Bevorzugt wird in der ersten inneren Mantelfläche mindestens eine Innenvertiefung erstellt, die sich über die erste Hohlzylinderhöhe erstreckt. Die mindestens eine Innenvertiefung in der ersten inneren Mantelfläche kann einen Transportkanal für eine Kühl- und Spülflüssigkeit bilden und ermöglicht die Ausbildung von Schneidabschnitten mit geringen Innenüberständen der Bohrsegmente auf der Innenseite des Schneidabschnittes. Die Breite, Tiefe, Form und/oder Anzahl der Innenvertiefung werden an die benötigte Flüssigkeitsmenge der Kühl- und Spülflüssigkeit angepasst.

In einer bevorzugten Weiterentwicklung wird das erste offene Rohrelement aus einem ersten Material und das zweite geschlossene Rohrelement aus einem zweiten Material hergestellt. Der mit dem erfindungsgemäßen Verfahren hergestellte Schneidabschnitt ist so aufgebaut, dass die Kraftübertragung auf den Schneidabschnitt über das erste offene Rohrelement und die Drehmomentübertragung auf den Schneidabschnitt über das zweite geschlossene Rohrelement erfolgt. Durch die Trennung des Schneidabschnittes in das erste offene Rohrelement und das zweite geschlossene Rohrelement kann die Auswahl des ersten Materials für das erste offene Rohrelement und des zweiten Materials für das zweite geschlossene Rohrelement an die unterschiedlichen Anforderungen an den Schneidabschnitt im Hinblick auf die Kraftübertragung und Drehmomentübertragung angepasst werden. Außerdem kann das zweite Material im Hinblick auf Zugbelastungen beim Entfernen einer verklemmten Bohrkrone angepasst werden.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt.

Der Einfachheit halber sind nachfolgend für identische oder ähnliche Teile oder Teile mit identischer oder ähnlicher Funktion gleiche Bezugszeichen verwendet. Es zeigen:
- FIGN. 1A,: B eine Bohrkrone mit einem Schneidabschnitt und einem Bohrschaftabschnitt, die über eine lösbare Verbindungseinrichtung verbindbar sind, in einem unverbundenen Zustand der Bohrkrone (FIG. 1A) und in einem verbundenen Zustand der Bohrkrone (FIG. 1B);
- FIGN. 2A-C: den Schneidabschnitt der FIG. 1 bestehend aus einem ersten offenen Rohrelement, einem zweiten geschlossenen Rohrelement und mehreren Bohrsegmenten in einem Längsschnitt entlang der Schnittlinie A-A in FIG. 1A;
- FIG. 3: die Herstellung des ersten offenen Rohrelementes aus einem ersten Blechteil; und
- FIGN. 4A, B: die Herstellung des zweiten Rohrelementes aus einem zweiten Blechteil (FIG. 4A), das zu einem zweiten offenen Rohrelement umgeformt wird (FIG. 4B).

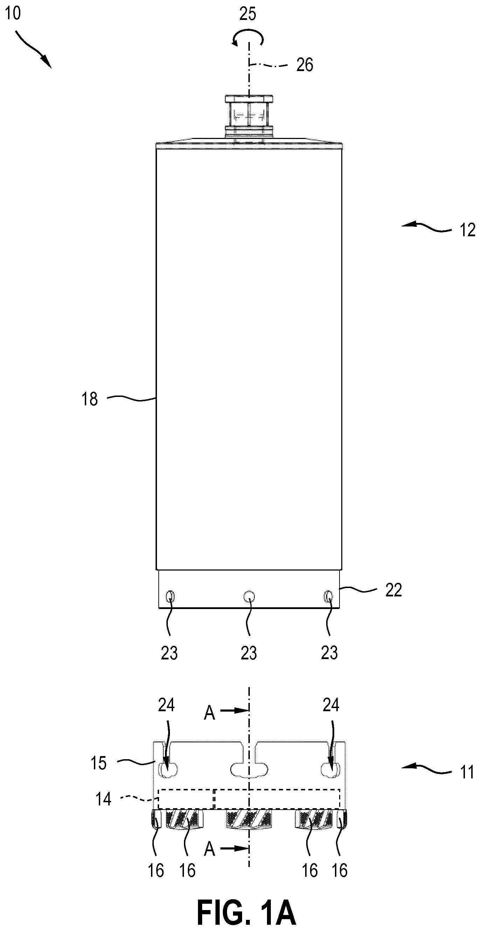

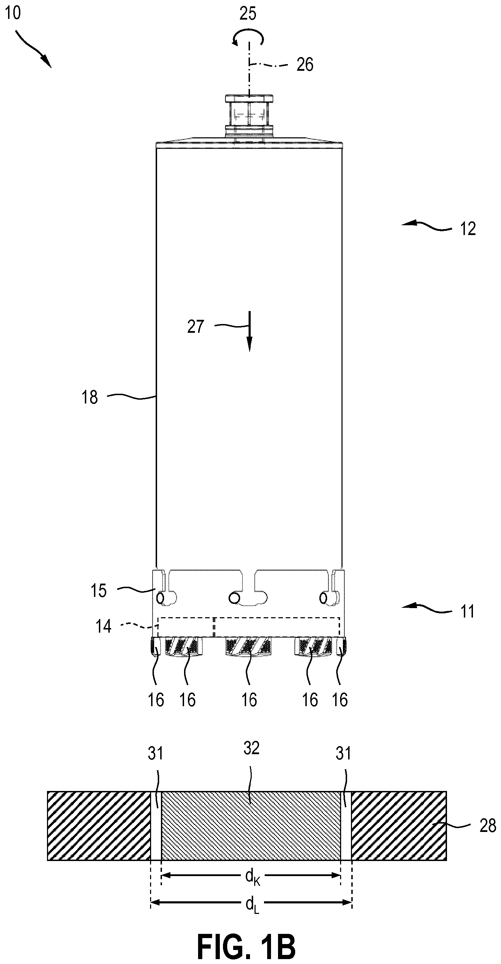

**FIGN. 1A****, B** zeigen eine Bohrkrone **10,** die einen Schneidabschnitt **11** und einen Bohrschaftabschnitt **12** umfasst, wobei der Schneidabschnitt 11 und der Bohrschaftabschnitt 12 über eine lösbare Verbindungseinrichtung **13** verbindbar sind. Dabei zeigt FIG. 1A den Schneidabschnitt 11 und Bohrschaftabschnitt 12 in einem unverbundenen Zustand der Bohrkrone und FIG. 1B zeigt den Schneidabschnitt 11 und Bohrschaftabschnitt 12 in einem verbundenen Zustand der Bohrkrone.

Der Schneidabschnitt 11 umfasst ein erstes offenes Rohrelement **14,** ein zweites geschlossenes Rohrelement **15** und mehrere Bohrsegmente **16,** die mit dem ersten offenen Rohrelement 14 und dem zweiten geschlossenen Rohrelement 15 verbunden sind. Der Schneidabschnitt 11 wird mithilfe des erfindungsgemäßen Verfahrens zur Herstellung eines Schneidabschnittes aus dem ersten offenen Rohrelement 14, dem zweiten geschlossenen Rohrelement 15 und den Bohrsegmenten 16 hergestellt. Die Bohrsegmente 16 sind mit dem ersten offenen Rohrelement 14 und dem zweiten geschlossenen Rohrelement 15 verbunden. Bei Bedarf können das erste offene Rohrelement 14 und das zweite geschlossene Rohrelement 15 noch zusätzlich miteinander verbunden sein.

Die Bohrsegmente 16 sind ringförmig angeordnet und bilden einen Bohrring mit Zwischenräumen. Der Schneidabschnitt 11 kann anstatt mehrerer Bohrsegmente 16 auch ein einzelnes Bohrsegment aufweisen, das in Form eines geschlossenen Bohrringes ausgebildet ist. Die Bohrsegmente 16 können mit dem ersten offenen Rohrelement 14 und dem zweiten geschlossenen Rohrelement 15 verschweißt, verlötet, verschraubt oder in einer anderen geeigneten Befestigungsart am ersten offenen Rohrelement 14 und am zweiten geschlossenen Rohrelement 15 befestigt sein. Der Bohrschaftabschnitt 12 umfasst einen rohrförmigen Bohrschaft **17,** einen Deckel **18** und ein Einsteckende **19,** über das die Bohrkrone 10 in einer Werkzeugaufnahme eines Kernbohrgerätes befestigt wird.

Die lösbare Verbindungseinrichtung 13 ist in Form einer kombinierten Steck-Dreh-Verbindung ausgebildet, wie sie in WO 2014/096359 A1 offenbart ist. Die lösbare Verbindungseinrichtung 13 umfasst ein erstes Steckelement **21,** das in den Schneidabschnitt 11 integriert ist, und ein zweites Steckelement **22,** das in den Bohrschaftabschnitt 12 integriert ist. Das erste und zweite Steckelement 21, 22 bilden eine Steckverbindung und werden zusätzlich über eine Drehverbindung gesichert. Die Drehverbindung umfasst mehrere Stiftelemente **23,** die in schlitzförmige Ausnehmungen **24** eingeführt werden. Die Stiftelemente 23 sind an einer Außenseite des zweiten Steckelementes 22 befestigt und die schlitzförmigen Ausnehmungen 24 sind im ersten Steckelement 21 vorgesehen. Der Schneidabschnitt 11 lässt sich vom Bediener einfach und schnell mit dem Bohrschaftabschnitt 12 verbinden. Dazu wird der Schneidabschnitt 11 mit dem ersten Steckelement 21 so auf das zweite Steckelement 22 des Bohrschaftabschnittes 12 gesteckt, dass die Stiftelemente 23 in den schlitzförmigen Ausnehmungen 24 angeordnet sind.

Im Bohrbetrieb wird die Bohrkrone 10 von einem Kernbohrgerät in einer Drehrichtung **25** um eine Drehachse **26** angetrieben, wobei die Drehachse 26 mit einer Längsachse des rohrförmigen Bohrschaftes 17 zusammenfällt. Während der Drehung der Bohrkrone 10 um die Drehachse 26 wird die Bohrkrone 10 entlang einer Vorschubrichtung **27** in ein Werkstück **28** bewegt, wobei die Vorschubrichtung 27 parallel zur Drehachse 26 verläuft. Die Bohrkrone 10 erzeugt im Werkstück 28 ein Bohrloch **31** mit einem Bohrlochdurchmesser **d**_{L} und einen Bohrkern **32** mit einem Kerndurchmesser **d_{K}.** Die Bohrsegmente 16 bilden einen Bohrring mit einem Außendurchmesser, der dem Bohrlochdurchmesser d_{L} entspricht, und einem Innendurchmesser, der dem Kerndurchmesser d_{K} entspricht.

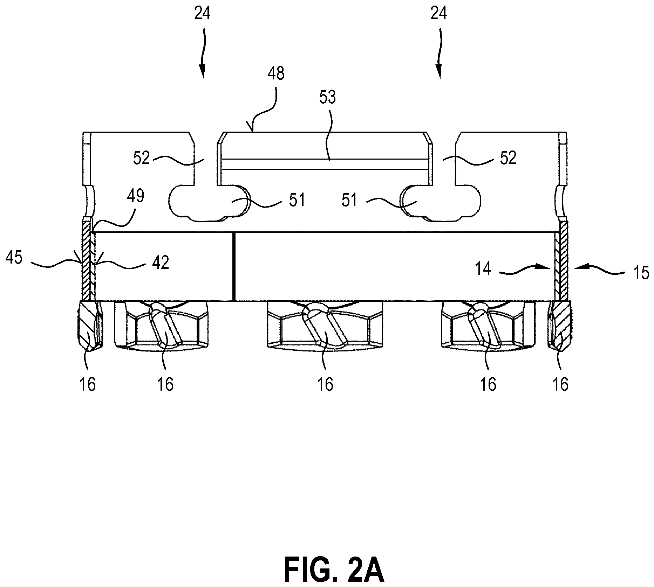

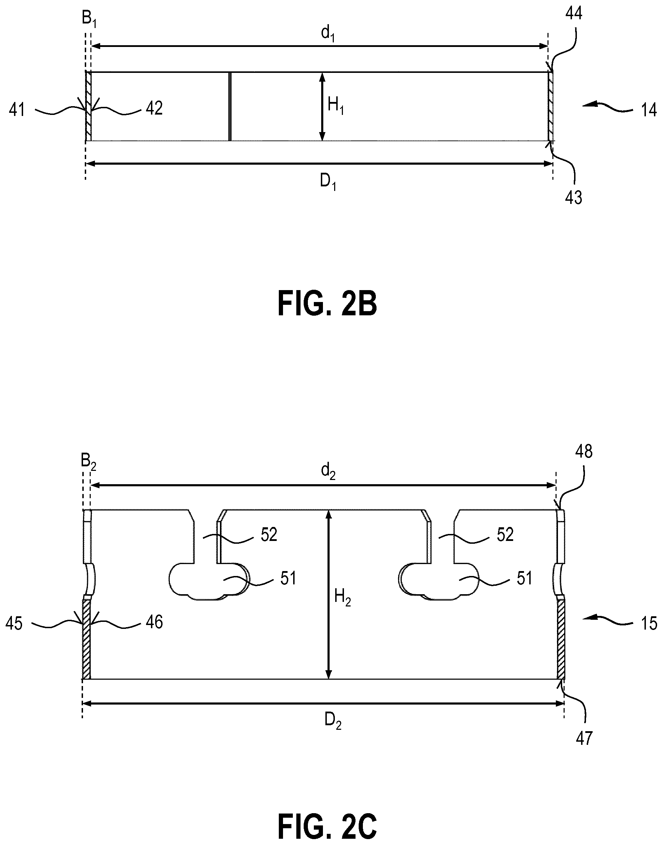

FIGN. 2A-C zeigen den Schneidabschnitt 11 der FIG. 1 mit dem ersten offenen Rohrelement 14, dem zweiten geschlossenen Rohrelement 15 und den Bohrsegmenten 16 in einem Längsschnitt entlang der Schnittlinie A-A in FIG. 1A. FIG. 2B zeigt das erste offene Rohrelement 14 und FIG. 2C das zweite geschlossene Rohrelement 15 des Schneidabschnittes 11.

Der Schneidabschnitt 11 wird aus dem ersten offenen Rohrelement 14, dem zweiten geschlossenen Rohrelement 15 und den Bohrsegmenten 16 hergestellt. Die Bohrsegmente 16 werden mit dem ersten offenen Rohrelement 14 und dem zweiten geschlossenen Rohrelement 15 verbunden. Dabei können die Bohrsegmente 16 mit dem ersten offenen Rohrelement 14 und dem zweiten geschlossenen Rohrelement 15 verschweißt, verlötet, verschraubt oder in einer anderen geeigneten Befestigungsart befestigt werden.

Das erste offene Rohrelement 14 ist in Form eines ersten Hohlzylinders mit einer ersten kreisringförmigen Querschnittsfläche ausgebildet. Das erste offene Rohrelement 14 umfasst eine erste äussere Mantelfläche **41,** eine erste innere Mantelfläche **42,** eine erste untere Stirnfläche **43** und eine erste obere Stirnfläche **44.** Die Abmessungen des ersten offenen Rohrelementes 14 sind durch eine erste Hohlzylinderhöhe **H₁**, einen ersten Innendurchmesser **d₁** und einen ersten Aussendurchmesser **D₁** definiert. Die Breite des ersten offenen Rohrelementes 14 ergibt sich als halbe Differenz des ersten Aussendurchmessers D₁ und des ersten Innendurchmessers d₁ und wird als erste Breite **B**₁ bezeichnet.

Das zweite geschlossene Rohrelement 15 ist in Form eines zweiten Hohlzylinders mit einer zweiten kreisringförmigen Querschnittsfläche ausgebildet. Das zweite geschlossene Rohrelement 15 umfasst eine zweite äussere Mantelfläche 45, eine zweite innere Mantelfläche **46,** eine zweite untere Stirnfläche **47** und eine zweite obere Stirnfläche **48.** Die Abmessungen des zweiten geschlossenen Rohrelementes 15 sind durch eine zweite Hohlzylinderhöhe **H₂**, einen zweiten Innendurchmesser **d₂** und einen zweiten Aussendurchmesser **D₂** definiert. Die Breite des zweiten geschlossenen Rohrelementes 15 ergibt sich als halbe Differenz des zweiten Aussendurchmessers D₂ und des zweiten Innendurchmessers d₂ und wird als zweite Breite **B₂** bezeichnet.

Die erste untere Stirnfläche 43 des ersten offenen Rohrelementes 14 und die zweite untere Stirnfläche 47 des zweiten geschlossenen Rohrelementes 15 werden bündig ausgerichtet. Die bündige Ausrichtung der ersten unteren Stirnfläche 43 und der zweiten unteren Stirnfläche 47 hat den Vorteil, dass eine breite Anbindungsfläche für die Bohrsegmente 16 entsteht, an der die Bohrsegmente 16 mit dem ersten offenen Rohrelement 14 und dem zweiten geschlossenen Rohrelement 15 verbunden werden können. Wenn die Bohrsegmente 16 mit der ersten unteren Stirnfläche 43 und der zweiten unteren Stirnfläche 47 verbunden werden, können das erste offene Rohrelement 14 und das zweite geschlossene Rohrelement 15 gleichzeitig mit den Bohrsegmenten 16 verbunden werden. Abhängig von den verwendeten Materialstärken kann es erforderlich sein, dass das erste offene Rohrelement 14 und das zweite geschlossene Rohrelement 15 zusätzlich miteinander verbunden werden.

Der Schneidabschnitt 11 ist so aufgebaut, dass die Kraftübertragung vom Bohrschaftabschnitt 12 über das erste offene Rohrelement 14 auf die Bohrsegmente 16 erfolgt und die Drehmomentübertragung vom Bohrschaftabschnitt 12 über das zweite geschlossene Rohrelement 15 auf die Bohrsegmente 16 erfolgt. Die erste obere Stirnfläche 44 des ersten offenen Rohrelementes 14 bildet an der Innenseite des Schneidabschnittes 11 eine ringförmige Anschlagschulter **49** für die Kraftübertragung von einem verbundenen Bohrschaftabschnitt. Die Drehmomentübertragung vom Bohrschaftabschnitt 12 auf den Schneidabschnitt 11 erfolgt über die Stiftelemente 23 und die schlitzförmigen Ausnehmungen 24. Das zweite geschlossene Rohrelement 15 des Schneidabschnittes 11 weist an der zweiten oberen Stirnfläche 48 mehrere schlitzförmige Ausnehmungen 24 auf. Die schlitzförmigen Ausnehmungen 24 umfassen jeweils einen Querschlitz **51** und einen Verbindungsschlitz **52,** wobei der Verbindungsschlitz 52 den Querschlitz 51 mit der zweiten oberen Stirnfläche 48 verbindet.

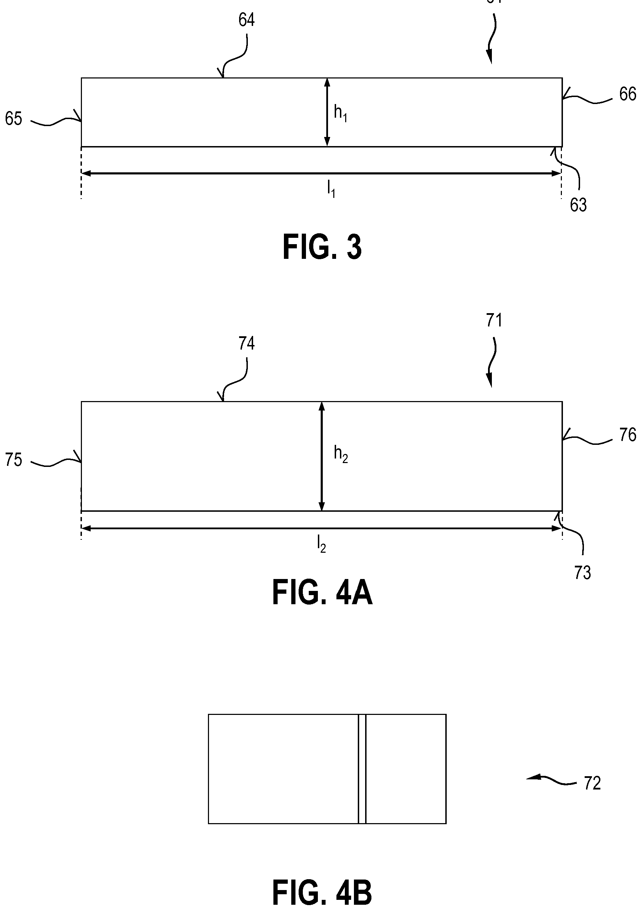

Das erste offene Rohrelement 14 kann aus einem ersten Material und das zweite geschlossene Rohrelement 15 aus einem zweiten Material hergestellt werden. Durch die Trennung des Schneidabschnittes 11 in das erste offene Rohrelement 14 und das zweite geschlossene Rohrelement 15 kann die Auswahl des ersten Materials an die Anforderungen des ersten offenen Rohrelementes 14 und die Auswahl des zweiten Materials an die unterschiedlichen Anforderungen des zweiten geschlossenen Rohrelementes 15 angepasst werden.**FIG. 3** zeigt die Herstellung des ersten offenen Rohrelementes 14 aus einem ersten Blechteil **61,** das zum ersten offenen Rohrelement 14 umgeformt wird. Das erste Blechteil 61 ist als ebenes Blechteil der ersten Blechdicke **b₁** ausgebildet, das eine erste Höhe **h₁** zwischen ersten Stirnflächen **63, 64** und eine erste Länge **l₁** zwischen ersten Stosskanten **65, 66** aufweist.

**FIGN. 4A****,** B zeigen die Herstellung des zweiten geschlossenen Rohrelementes 15 aus einem zweiten Blechteil **71** (FIG. 4A), das zu einem zweiten offenen Rohrelement **72** umgeformt wird (FIG. 4B). Das zweite offene Rohrelement 72 wird zum zweiten geschlossenen Rohrelement 15 verbunden.

Das zweite Blechteil 71 ist als ebenes Blechteil der zweiten Blechdicke **b₂** ausgebildet, das eine zweite Höhe **h₂** zwischen zweiten Stirnflächen **73, 74** und eine zweite Länge **l₂** zwischen zweiten Stosskanten **75, 76** aufweist. Das zweite offene Rohrelement 72 wird an den zweiten Stosskanten 75, 76 zum zweiten geschlossenen Rohrelement 15 verbunden. Das zweite geschlossene Rohrelement 15 unterscheidet sich von dem zweiten offenen Rohrelement 72 dadurch, dass die zweiten Stosskanten 75, 76 miteinander verbunden sind. Für die Verbindung der zweiten Stosskanten 75, 76 eignet sich jede stoffschlüssige oder formschlüssige Verbindung.

## Patentansprüche

1. Verfahren zur Herstellung eines Schneidabschnittes (11) für eine Bohrkrone (10), wobei der Schneidabschnitt (11) über eine lösbare Verbindungseinrichtung (13) mit einem Bohrschaftabschnitt (12) der Bohrkrone (10) verbunden werden kann, mit den Verfahrensschritten:
▪ ein erstes offenes Rohrelement (14) wird in Form eines ersten Hohlzylinders mit einer ersten äusseren Mantelfläche (41), einer ersten inneren Mantelfläche (42), einer ersten unteren Stirnfläche (43) und einer ersten oberen Stirnfläche (44) ausgebildet und weist eine erste Hohlzylinderhöhe (H₁), einen ersten Innendurchmesser (d₁) und einen ersten Aussendurchmesser (D₁) auf,
▪ ein zweites offenes Rohrelement (72) wird in Form eines zweiten Hohlzylinders mit einer zweiten äusseren Mantelfläche (45), einer zweiten inneren Mantelfläche (46), einer zweiten unteren Stirnfläche (47) und einer zweiten oberen Stirnfläche (48) ausgebildet und weist eine zweite Hohlzylinderhöhe (H₂), einen zweiten Innendurchmesser (d₂) und einen zweiten Aussendurchmesser (D₂) auf,
▪ das erste offene Rohrelement (14) wird in das zweite offene Rohrelement (72) gesteckt,
▪ ein oder mehrere Bohrsegmente (16) werden mit dem ersten offenen Rohrelement (14) und dem zweiten Rohrelement (15) verbunden
**dadurch gekennzeichnet, dass** das zweite offene Rohrelement (72) an zweiten Stosskanten (75, 76) zu einem zweiten geschlossenen Rohrelement (15) verbunden wird und im zweiten geschlossenen Rohrelement (15) mindestens eine schlitzförmige Ausnehmung (24) erstellt wird, wobei die mindestens eine schlitzförmige Ausnehmung (24) einen Querschlitz (51) und einen Verbindungsschlitz (52) aufweist und der Verbindungsschlitz (52) den Querschlitz (51) mit der zweiten oberen Stirnfläche (48) des zweiten geschlossenen Rohrelementes (15) verbindet.

2. Verfahren nach Anspruch 1, **dadurch gekennzeichnet, dass** die erste untere Stirnfläche (43) und die zweite untere Stirnfläche (47) bündig ausgerichtet werden.

3. Verfahren nach Anspruch 2, **dadurch gekennzeichnet, dass** das eine oder die mehreren Bohrsegmente (16) mit der ersten unteren Stirnfläche (43) und der zweiten unteren Stirnfläche (47) verbunden werden.

4. Verfahren nach Anspruch 1, **dadurch gekennzeichnet, dass** in der zweiten inneren Mantelfläche (46) mindestens eine Quernut (53) erstellt wird, wobei die mindestens eine Quernut (53) in Höhe des Verbindungsschlitzes (52) angeordnet wird.

5. Verfahren nach einem der Ansprüche 1 bis 4, **dadurch gekennzeichnet, dass** in der ersten inneren Mantelfläche (42) mindestens eine Innenvertiefung erstellt wird, die sich über die erste Hohlzylinderhöhe (H₁) erstreckt.

6. Verfahren nach einem der Ansprüche 1 bis 5, **dadurch gekennzeichnet, dass** das erste offene Rohrelement (14) aus einem ersten Material und das zweite geschlossene Rohrelement (15) aus einem zweiten Material hergestellt wird.

## Claims

1. Method for producing a cutting section (11) for a core bit (10), wherein the cutting section (11) can be connected to a drill shaft section (12) of the core bit (10) via a releasable connecting device (13), comprising the following method steps:
▪ a first open tubular element (14) is in the form of a first hollow cylinder with a first outer lateral surface (41), a first inner lateral surface (42), a first lower end surface (43) and a first upper end surface (44) and has a first hollow cylinder height (H₁), a first inside diameter (d₁) and a first outside diameter (D₁),
▪ a second open tubular element (72) is in the form of a second hollow cylinder with a second outer lateral surface (45), a second inner lateral surface (46), a second lower end surface (47) and a second upper end surface (48) and has a second hollow cylinder height (H₂), a second inside diameter (d₂) and a second outside diameter (D₂),
▪ the first open tubular element (14) is pushed into the second open tubular element (72),
▪ one or more drill segments (16) are connected to the first open tubular element (14) and to the second tubular element (15),
**characterized in that** the second open tubular element (72) is connected to a second closed tubular element (15) at second abutting edges (75, 76), and at least one slot-shaped recess (24) is created in the second closed tubular element (15), wherein the at least one slot-shaped recess (24) has a transverse slot (51) and a connecting slot (52), and the connecting slot (52) connects the transverse slot (51) to the second upper end surface (48) of the second closed tubular element (15).

2. Method according to Claim 1, **characterized in that** the first lower end surface (43) and the second lower end surface (47) are aligned flush.

3. Method according to Claim 2, **characterized in that** the one or the more drill segments (16) are connected to the first lower end surface (43) and to the second lower end surface (47).

4. Method according to Claim 1, **characterized in that** at least one transverse groove (53) is created in the second inner lateral surface (46), wherein the at least one transverse groove (53) is arranged level with the connecting slot (52).

5. Method according to one of Claims 1 to 4, **characterized in that** at least one internal depression is created in the first inner lateral surface (42), which internal depression extends over the first hollow cylinder height (H₁).

6. Method according to one of Claims 1 to 5, **characterized in that** the first open tubular element (14) is produced from a first material and the second closed tubular element (15) from a second material.

## Revendications

1. Procédé de fabrication d'une section de coupe (11) pour une couronne (10), la section de coupe (11) pouvant être reliée à une section de tige de forage (12) de la couronne (10) par l'intermédiaire d'un dispositif de liaison amovible (13), avec les étapes de procédé suivantes :
- un premier élément tubulaire ouvert (14) est réalisé sous la forme d'un premier cylindre creux avec une première surface d'enveloppe extérieure (41), une première surface d'enveloppe intérieure (42), une première surface d'extrémité inférieure (43) et une première surface d'extrémité supérieure (44) et présente une première hauteur de cylindre creux (H₁), un premier diamètre intérieur (d₁) et un premier diamètre extérieur (D₁),
- un deuxième élément tubulaire ouvert (72) est réalisé sous la forme d'un deuxième cylindre creux avec une deuxième surface d'enveloppe extérieure (45), une deuxième surface d'enveloppe intérieure (46), une deuxième surface d'extrémité inférieure (47) et une deuxième surface d'extrémité supérieure (48) et présente une deuxième hauteur de cylindre creux (H₂), un deuxième diamètre intérieur (d₂) et un deuxième diamètre extérieur (D₂),
- le premier élément tubulaire ouvert (14) est enfiché dans le deuxième élément tubulaire ouvert (72),
- un ou plusieurs segments de forage (16) sont reliés au premier élément tubulaire ouvert (14) et au deuxième élément tubulaire (15),
**caractérisé en ce que** le deuxième élément tubulaire ouvert (72) est relié à des deuxièmes bords de joint (75, 76) pour former un deuxième élément tubulaire fermé (15) et au moins un évidement en forme de fente (24) est créé dans le deuxième élément tubulaire fermé (15), l'au moins un évidement en forme de fente (24) présentant une fente transversale (51) et une fente de liaison (52) et la fente de liaison (25) reliant la fente transversale (51) à la deuxième surface d'extrémité supérieure (48) du deuxième élément tubulaire fermé (15).

2. Procédé selon la revendication 1, **caractérisé en ce que** la première surface d'extrémité inférieure (43) et la deuxième surface d'extrémité inférieure (47) sont alignées.

3. Procédé selon la revendication 2, **caractérisé en ce que** le ou les segments de forage (16) sont reliés à la première surface d'extrémité inférieure (43) et à la deuxième surface d'extrémité inférieure (47).

4. Procédé selon la revendication 1, **caractérisé en ce qu'**au moins une rainure transversale (53) est créée dans la deuxième surface d'enveloppe intérieure (46), l'au moins une rainure transversale (53) étant agencée à hauteur de la fente de liaison (52).

5. Procédé selon l'une quelconque des revendications 1 à 4, **caractérisé en ce qu'**au moins une cavité intérieure s'étendant sur la première hauteur de cylindre creux (H₁) est créée dans la première surface d'enveloppe intérieure (42).

6. Procédé selon l'une quelconque des revendications 1 à 5, **caractérisé en ce que** le premier élément tubulaire ouvert (14) est fabriqué dans un premier matériau et le deuxième élément tubulaire fermé (15) dans un deuxième matériau.
